# EUROPEAN PATENT SPECIFICATION

(11) **EP 4 335 756 B1**
(45) Date of publication and mention of the grant of the patent: **03.06.2026**
(21) Application number: 21939860.9
(22) Date of filing: 07.05.2021
(51) Int. Cl.: B64G 1/66, B64G 1/40, B64G 1/24

(54) **THRUST GENERATING DEVICE AND SPACECRAFT**
SCHUBERZEUGUNGSVORRICHTUNG UND RAUMFAHRZEUG
DISPOSITIF DE GÉNÉRATION DE POUSSÉE ET ENGIN SPATIAL

(43) Date of publication of application: 13.03.2024
(73) Proprietor: Sky Perfect JSAT Corporation, Tokyo 107-0052 (JP); RIKEN, Wako-shi, Saitama 351-0198 (JP)
(72) Inventor: FUKUSHIMA, Tadanori, Tokyo 107-0052 (JP); ADACHI, Kazuma, Tokyo 107-0052 (JP); WADA, Satoshi, Wako-shi, Saitama 351-0198 (JP); EBISUZAKI, Toshikazu, Wako-shi, Saitama 351-0198 (JP); OGAWA, Takayo, Wako-shi, Saitama 351-0198 (JP); TSUNO, Katsuhiko, Wako-shi, Saitama 351-0198 (JP)
(74) Representative: Ribeiro, James Michael
(86) International application number: PCT/JP2021/017563
(87) International publication number: WO 2022/234669

(56) References cited:
- WO-A1-2011/158646
- WO-A1-2020/152744
- US-A- 5 153 407
- US-A1- 2005 205 811
- US-A1- 2011 302 906
- US-A1- 2011 302 906
- US-B1- 6 530 212
- SCHALL W O: "REMOVING SMALL DEBRIS FROM EARTH ORBITS", ZEITSCHRIFT FUR FLUGWISSENSCHAFTEN UND WELTRAUMFORSCHUNG, DFVLR. KOLN, DE, vol. 15, no. 5, 1 October 1991 (1991-10-01), pages 333 - 341, XP000320646, ISSN: 0342-068X
- SUGIOKA KOJI: "Micropatterning of Quartz Substrates by Multi-Wavelength Vacuum-Ultraviolet Laser Ablation", JAPANESE JOURNAL OF APPLIED PHYSICS, 1 January 1993 (1993-01-01), pages 6185 - 6189, XP093005211, [retrieved on 20221206], DOI: 10.1143/JJAP.32.6185
- "Laser Ablation", 1 January 1996, ELSEVIER, ISBN: 978-0-444-82412-7, article SUGIOKA K., WADA S., OHNUMA Y., NAKAMURA A., TASHIRO H., TOYODA K.: "Multiwavelength irradiation effect in fused quartz ablation using vacuum-ultraviolet Raman laser", pages: 347 - 351, XP093005216, DOI: 10.1016/B978-0-444-82412-7.50062-6
- ZHANG J, ET AL.: "PRECISE MICROFABRICATION OF WIDE BAND GAP SEMICONDUCTORS (SIC AND GAN) BY VUV-UV MULTIWAVELENGTH LASER ABLATION", APPLIED SURFACE SCIENCE, ELSEVIER, AMSTERDAM , NL, vol. 127-129, 21 July 1997 (1997-07-21), Amsterdam , NL , pages 793 - 799, XP001086614, ISSN: 0169-4332, DOI: 10.1016/S0169-4332(97)00744-7

## Description

### [Technical Field]

The present invention relates to a thrust generating device that irradiates a target with a laser beam to cause ablation to generate thrust for the target, and a spacecraft having the thrust generating device.

### [Background Art]

In recent years, an increase in debris (space debris) in a cosmic space has become an issue. The debris indicates an unnecessary artificial satellite, a defective artificial satellite, a part of an artificial satellite released due to collision or the like, or the like. The debris has the risk of colliding with an artificial satellite in operation. Even a collision of a debris of about a few centimeters with an artificial satellite causes destructive damage to the artificial satellite. Further, there is a concern about an issue (Kessler syndrome) in which the debris explosively increases after colliding with an artificial satellite. In order to prevent an increase in the debris, the debris is needed to re-enter the atmosphere to be burned and removed or move to an orbit (grave orbit) where the debris does not collide with other satellites.

The present inventors have proposed a technology to irradiate debris with a laser beam and control an orbit or an attitude of the debris by thrust generated by laser beam irradiation (PTL 1).

### [Citation List]

### [Patent Literature]

[PTL 1] WO 2020/152744

### [Non Patent Literature]

[NPL 1] K. Sugioka, S. Wada, A. Tsunemi, T. Sakai, H. Takai, H. Moriwaki, A. Nakamura, H. Tashiro, K. Toyoda: "Micropatterning of Quartz Substrates by Multi-wavelength Vacuum-Ultraviolet Laser Ablation" Jpn. J. Appl. Phys., 32, 6185-6189 (1993).
[NPL 2] K. Sugioka, S. Wada, Y. Ohnuma, A. Nakamura, H. Tashiro, K. Toyoda: "Multiwavelength irradiation effect in fused quartz ablation using vacuum-ultraviolet Raman laser" Appl. Surf. Sci., 96-98, 347-351 (1996).
[NPL 3] J. Zhang, K. Sugioka, S. Wada, H. Tashiro, K. Toyoda, K. Midorikawa: "Precise microfabrication of wide band gap semiconductors (SiC and GaN) by VUV-UV multiwavelength laser ablation" Appl. Surf. Sci., 127-129, 793-799 (1998).
[NPL 4] Schall, W. O: "Removing Small Debris from Earth Orbits", Z. Flugwiss. Weltraumforsch., 15, pp. 333-341 (1991), discloses the use of high-power lasers for removing small orbital debris.

### [Summary of Invention]

### [Technical Problem]

In order to facilitate the control of debris, generation of strong thrust is desired. It is proposed in PTL 1 that a thrust enhancing member is attached to debris and irradiated with a laser beam to generate strong thrust. However, the attachment of the thrust enhancing member to the debris is costly. Further, this method is not applicable to an existing object.

Therefore, the present invention has an object of providing a technology to generate strong thrust in a simpler and easier way than before.

### [Solution to Problem]

An aspect of the present invention provides a thrust generating device for irradiating a target with a laser beam to generate thrust for the target according to claim 1.

According to this aspect, the surface of a target is excited by one of a first laser beam and a second laser beam, and an absorptivity of the other of the first laser beam and the second laser beam is increased. Thus, it is possible to more efficiently cause ablation than a case in which a single laser beam is used. As a result, stronger thrust is obtained.

For example, the intensity of the first laser beam is preferably higher than that of the second laser beam, and the second laser beam (second wavelength) preferably has a higher absorptivity in a target than the first laser beam (first wavelength). By excitation of the surface of the target through irradiation with the second laser beam that has low intensity but has a higher absorptivity, the absorptivity of the first laser beam that originally has a low absorptivity becomes high. Accordingly, it is possible to more efficiently cause ablation than a case in which only the first laser beam is used.

Note that a laser beam device according to another example may be configured to include a first laser beam source that generates a first laser beam, and a second laser beam source that generates a second laser beam.

The laser beam source is not particularly limited. However, a solid laser or a fiber laser that oscillates at a wavelength of 1 µm band is, for example, employable. The wavelength converter may be a type that converts the wavelength (first wavelength) of the first laser beam into a shorter wavelength or a type that converts the wavelength of the first laser beam into a longer wavelength. For example, the wavelength converter may include a non-linear optical crystal that generates a harmonic of the first laser beam, and generate the second laser beam having the second wavelength shorter than the first wavelength. Here, the second laser beam may be any harmonic (such as a second harmonic, a third harmonic, and a fourth harmonic) of the first laser beam. Further, the wavelength converter may include an optical parametric oscillator, and generate the second laser beam having the second wavelength longer than the first wavelength. Note that the intensity of the second laser beam is not required to be high. Therefore, the wavelength converter may have low wavelength conversion efficiency. Accordingly, adjustment of the wavelength converter does not require precision, which carries an advantage that the device can be simply configured. Although a state in which the wavelength conversion efficiency is high is not excluded, the wavelength conversion efficiency may be 10% or less (1/10 or less) and 0.1% (1/1000) or less. Such a device is easily manufactured, and suitably used in, for example, a cosmic space as well.

Another aspect of the present invention provides a spacecraft that irradiates a target with a laser beam to change an orbit or an attitude of the target in a cosmic space, the spacecraft including: the thrust generating device described above, wherein the irradiation device irradiates the target with the laser beam so that the laser beam generated from the laser beam generating device converges at the target.

### [Advantageous Effects of Invention]

According to the present invention, it is possible to generate strong thrust in a simpler and easier way than before.

### [Brief Description of Drawings]

[Fig. 1] Fig. 1 is a diagram showing an example of debris control according to the present embodiment.
[Fig. 2] Fig. 2 is a diagram showing an example of laser beam irradiation according to the present embodiment.
[Fig. 3] Fig. 3 is a diagram showing an example of a laser beam irradiation system according to the present embodiment.
[Fig. 4] Fig. 4 is a diagram showing an example of a focus unit and a steering unit according to the present embodiment.
[Fig. 5] Figs. 5A to 5C are diagrams each showing a configuration example of a laser beam generating device according to the present embodiment.
[Fig. 6] Fig. 6 is a graph showing the wavelength dependence characteristics of an absorptivity for each material.
[Fig. 7] Fig. 7 is a diagram showing another configuration example of the laser beam generating device according to the present embodiment.

### [Description of Embodiments]

### (Embodiment)

### <Overview>

A thrust generating device according to the present embodiment is a device that irradiates a target with a laser beam to cause ablation to generate thrust for the target. In the present embodiment, the thrust generating device is mounted in a spacecraft (artificial satellite) and used to control an orbit or an attitude of a target existing in a cosmic space. By the control of the orbit or the attitude of the target, removal of an unnecessary target is, for example, enabled.

In the present embodiment, the target may be an artifact including debris (space debris) existing in the cosmic space or an object (for example, a meteorite or the like) other than the artifact. The debris may include an uncontrollable artificial satellite, an artificial satellite that becomes unnecessary as its operation ends, and a part of an artificial satellite released due to collision or the like. The present embodiment will be described using debris as example.

The control of the orbit or the attitude may indicates a change in the orbit or the attitude of the target (debris) existing in the cosmic space. The change in the orbit may indicate, for example, gaining or losing the altitude of the debris. Thus, the debris is caused to re-enter the atmosphere to be burned and removed or caused to move to an orbit (grave orbit) where the debris does not collide with other satellites, or the artificial satellite is temporarily moved to avoid the collision between the debris and other objects. Further, the change in the attitude indicates, for example, a reduction in rotation of the debris. Thus, a collision risk caused by physical access is alleviated.

Note that the present embodiment will describe an example in which an artificial satellite is used as a spacecraft. However, the spacecraft is not limited to an unmanned spacecraft, and a manned spacecraft may be used as the spacecraft. Further, equipment (sub-machine) mounted in an artificial satellite (main machine) may be used as the spacecraft. Further, use of the thrust generating device and the type of a target are not limited to those exemplified above, and may be applied to, for example, any object under a ground environment.

### <Debris Removal Method>

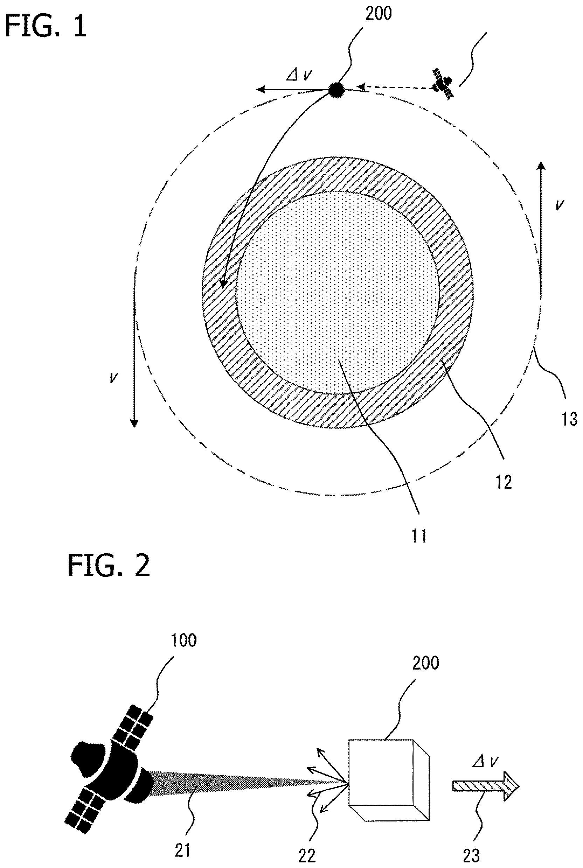

Fig. 1 is a diagram showing an example of debris removal according to the present embodiment. Fig. 1 shows an earth 11, an atmosphere 12 covering the earth 11, and an orbit 13 that is an orbit around the earth. Further, a spacecraft 100 is an artificial satellite that irradiates a target with a laser beam. Debris 200 is an object that moves in the orbit 13 at a speed v, and is, for example, an artificial satellite that becomes unnecessary as its operation period ends, or the like. The spacecraft 100 irradiates the debris 200 with a laser beam to causes a speed change Δv in the debris 200. By the reaction force, the debris 200 is caused to, for example, lose its altitude and re-enter the atmosphere to be burned and removed. Note that a debris removal method is not limited to the above. For example, the debris 200 may be caused to gain (or lose) the altitude to move to an orbit (grave orbit) in which other artificial satellites do not exist.

Fig. 2 is a diagram showing thrust generated by laser beam irradiation. A laser beam 21 is a laser beam irradiated by the spacecraft 100. When the debris 200 is irradiated with the laser beam 21, a substance on the surface of the debris 200 is vaporized and made into plasma to be blown out (plasma ablation). When the debris 200 receives reaction of a force (arrows 22) with which the substance is blown out as thrust at this time, the speed change Δv (arrow 23) is caused in the debris 200.

### <Configuration>

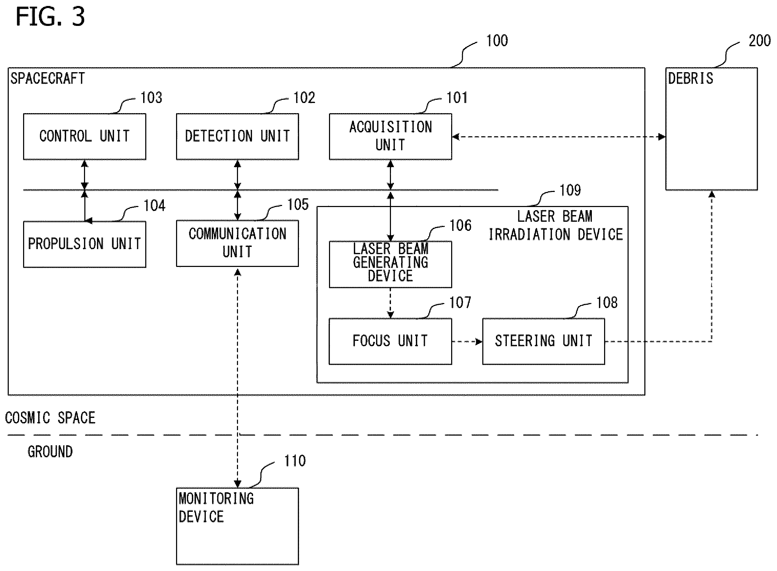

Fig. 3 is a diagram showing the configuration of a laser beam irradiation system according to the present embodiment. The laser beam irradiation system includes the spacecraft 100, a monitoring device 110, or the like.

### <<Spacecraft 100>>

The spacecraft 100 is an artificial satellite having a laser beam irradiation function. The spacecraft 100 has an acquisition unit 101, a detection unit 102, a control unit 103, a propulsion unit 104, a communication unit 105, a laser beam irradiation device 109, or the like. The laser beam irradiation device 109 has a laser beam generating device 106, a focus unit 107, and a steering unit 108. The laser beam irradiation device 109 irradiates the debris 200 with a laser beam output by the laser beam generating device 106 via the focus unit 107 and the steering unit 108, and causes ablation to generate thrust for the debris 200. The laser beam irradiation device 109 corresponds to a thrust generating device.

The acquisition unit 101 is a function unit that acquires an image using an imaging unit not shown. Further, the acquisition unit 101 acquires reflected light of a search laser beam output by the laser beam generating device 106 that will be described later. The acquisition unit 101 can be grasped as various sensors.

The detection unit 102 is a function unit that acquires detected information on the debris 200 on the basis of an image or reflected light acquired by the acquisition unit 101. The detected information is the distance between the spacecraft 100 and the debris 200, the position, size, shape, captured image, and rotation state (attitude) of the debris 200, or the like. For example, the detection unit 102 acquires the distance between the spacecraft 100 and the debris 200 using a light detection and ranging (Lidar) technology.

The control unit 103 (irradiation control means) controls, on the basis of the distance between the spacecraft 100 and the debris 200, the focus unit 107 so that a laser beam emitted from the laser beam generating device 106 converges at the debris 200. For example, when the focus unit 107 is an optical system, the control unit 103 adjusts a focal distance of the optical system. Further, the control unit 103 is a function unit that determines, on the basis of detected information acquired by the detection unit 102, an irradiation position of a laser beam with respect to the debris 200 and an output value of a laser beam. For example, the control unit 103 determines an irradiation position of a laser beam on the basis of the position or the attitude of the debris 200 detected by the detection unit 102 and an area suitable for laser beam irradiation. The region suitable for laser beam irradiation is a region other than a place (for example, a fuel tank or the like) at which laser beam irradiation possibly entails a risk. Further, the control unit 103 may determine, in consideration of a safe area or the like on the ground, a position or a timing at which a laser beam is irradiated. The safe area is an area for dropping a fragment or the like left without being burned out when the debris 200 re-enters the atmosphere. For example, the safe area is an area on the sea distant by several-ten to several-hundred nautical miles or more from a sea route or a land of a ship, an airplane, or the like. The control unit 103 may acquire information on a region suitable for laser beam irradiation or a safe area from the monitoring device 110 that will be described later via the communication unit 105.

The propulsion unit 104 is a function unit that controls an attitude or an orbit of the spacecraft 100 using a thrust generating device (actuator) such as a thruster and a wheel for adjusting an attitude necessary for laser beam irradiation. An attitude control method is not particularly limited, and a three-axis stabilized system, any existing system such as a bias momentum system, a zero momentum system, or the like can be employed.

The communication unit 105 is a function unit for communicating with the monitoring device 110 on the ground. Via the communication unit 105, the spacecraft 100 acquires an approximate position (rough orbit position) of the debris 200, information on a region suitable for laser beam irradiation or a safe area described above, or the like.

The laser beam generating device 106 is a device that outputs a laser beam. In the present embodiment, the laser beam generating device 106 simultaneously irradiates a target with a plurality of different laser beams to more efficiently cause ablation in the target. More detailed descriptions of the laser beam generating device 106 and the ablation will be described later.

The focus unit 107 is a member for converging a laser beam emitted by the laser beam generating device 106. Via the focus unit 107, the spacecraft 100 enables emission of a laser beam to the debris 200 even from a remote spot. In the present embodiment, a general telescope is used as the focus unit 107. However, the focus unit 107 is not limited to a telescope so long as a member for converging a laser beam is used. Further, a position distant by about 20 m to 1000 m from the debris 200 is assumed as a remote spot in the present embodiment. However, the distance between the spacecraft 100 and the debris 200 is not particularly limited.

The steering unit 108 is a member for changing an irradiation direction of a laser beam output by the focus unit 107. For example, a movable mirror is available as the steering unit 108. Using the steering unit 108, the spacecraft 100 can easily direct an irradiation direction of a laser beam toward the debris 200 even from a remote spot. Further, even when the spacecraft 100 and the debris 200 do not exist in the same orbit, the spacecraft 100 can direct an irradiation direction of a laser beam toward the debris 200 even from a remote spot. Therefore, the spacecraft 100 reduces the risk of colliding with the debris 200.

In the present embodiment, the laser beam generating device 106, the focus unit 107, and the steering unit 108 correspond to a "thrust generating device" for generating thrust for a target as a whole. Further, the focus unit 107 and the steering unit 108 correspond to an "irradiation device" for irradiating a target with a laser beam output from the laser beam generating device 106.

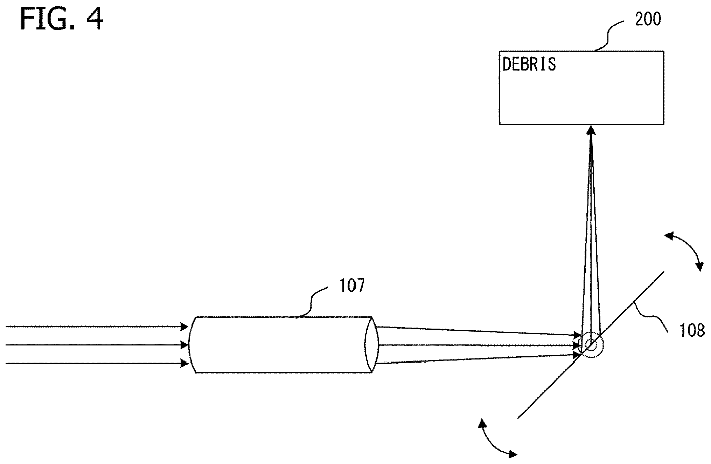

Fig. 4 is a diagram showing an example of the configuration of the focus unit 107 and the steering unit 108 according to the present embodiment. A laser beam output from the laser beam generating device 106 gradually converges via the focus unit 107. Then, the laser beam is reflected by the steering unit 108, and its irradiation direction is changed.

Note that a method for directing a laser beam toward a target is not limited to the above. For example, a direction in which a laser beam is emitted may be changed by attitude control of the spacecraft 100 itself without using the steering unit 108. Further, a direction in which a laser beam is emitted may be changed by changing a direction of the focus unit 107. Note that an example in which the focus unit 107 and the steering unit 108 are provided as a part of the spacecraft 100 is shown in the present embodiment. However, the focus unit 107 and the steering unit 108 may be provided separately from the spacecraft 100.

### <<Monitoring Device 110>>

The monitoring device 110 is a device that detects an approximate position of the debris 200 or transmits detected information on the debris 200 to the spacecraft 100. Further, the monitoring device 110 may transmit information on a region suitable for laser beam irradiation or a safe area or the like described above to the spacecraft 100.

### <<Debris 200>>

In the present embodiment, the debris 200 may include a large one such as an uncontrollable artificial satellite and an artificial satellite that becomes unnecessary as its operation ends and a small one such as a part (for example, a component like a screw) of an artificial satellite released due to collision or the like. Note that the debris 200 is not limited to the above as a target but includes an object (for example, a meteorite or the like) existing in a cosmic space. Further, the size of the debris 200 is also not particularly limited. Generally, an object existing in the cosmic space is detectable from the ground provided that the size of the object is 10 cm or more. However, the spacecraft 100 according to the present embodiment is capable of detecting even an object having a size of 10 cm or less to detect the debris 200 in the cosmic space.

### <Descriptions of Details of Laser Beam Device and Ablation Enhancement>

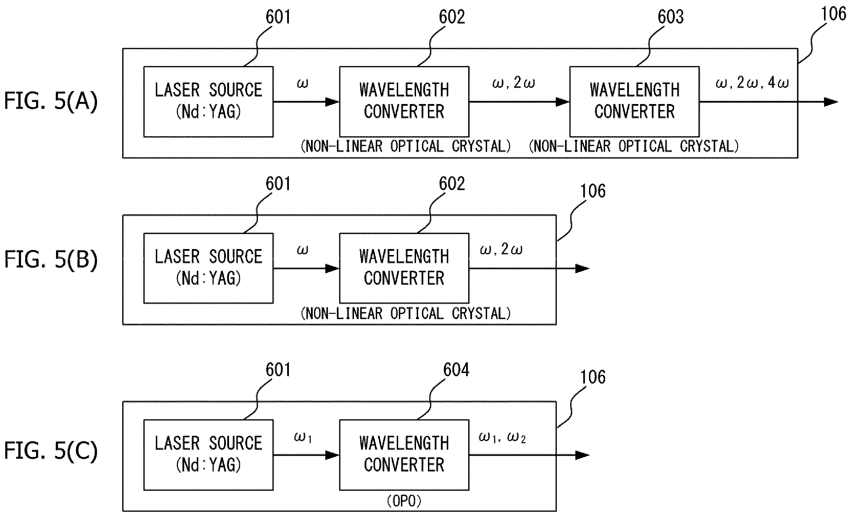

Fig. 5A is a block diagram showing a specific example of the laser beam generating device 106. The laser beam generating device 106 is configured to include a laser beam source 601, a wavelength converter 602, and a wavelength converter 603. The laser beam source 601 is, for example, a fiber laser or a solid laser using an Nd:YAG crystal that oscillates a laser beam having a wavelength of 1064 nm. In order to oscillate a laser beam of 1 µm band, a Yb:YAG crystal may be used instead of the Nd:YAG crystal to oscillate a laser beam having a wavelength of 1030 nm. In the present embodiment, a continuous wave (CW) laser beam is oscillated. However, a pulse laser beam may be oscillated. The wavelength converter 602 has a non-linear optical crystal for converting a part of a laser beam generated from the laser beam source 601 into a second harmonic. The non-linear optical crystal converts two photons of a fundamental wave into one photon having a frequency twice as high as (having a wavelength 1/2 of) that of the two photons. Similarly, the wavelength converter 603 has a non-linear optical crystal for converting a second harmonic output from the wavelength converter into a fourth harmonic. The non-linear optical crystal converts two photons of a second harmonic into one photon having a frequency twice as high as (having a wavelength 1/2 of) that of the two photons. Accordingly, a fundamental wave (1064 nm), a second harmonic (532 nm), and a fourth harmonic (266 nm) are output from the laser beam generating device 106.

Here, it has been reported by NPL 1 to NPL 3 that enhancement of ablation is enabled by simultaneously irradiating a target with laser beams having different wavelengths as described above. In a brief description of a principle, when a target is simultaneously irradiated with a laser beam having a wavelength of a low absorptivity and a laser beam having a wavelength of a high absorptivity, the surface of the target is excited by absorption of the laser beam having the wavelength of the high absorptivity. As a result, ablation is caused more strongly even by a laser beam originally having a low absorptivity.

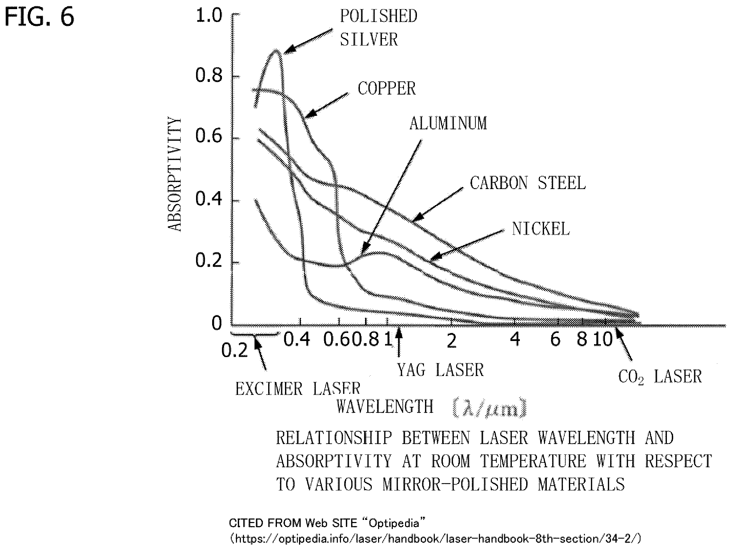

Fig. 6 is a graph showing the wavelength dependence characteristics of an absorptivity for each material. Here, the material of a target is aluminum generally used as a raw material for an artificial satellite. A laser beam of 1 µm band can be easily generated by an Nd:YAG crystal or a Yb:YAG crystal, but has a low absorptivity with respect to aluminum and has low ablation intensity. However, a fourth harmonic (266 nm) has a high absorptivity. Therefore, by simultaneously irradiating the aluminum target with at least a fundamental wave and the fourth harmonic, the surface of the target is excited by absorption of the fourth harmonic. As a result, the fundamental wave is more easily absorbed, and ablation is easily caused.

Here, the intensity of the fourth harmonic is not needed to be overly high, and may be 10% or less, 1% or less, or 0.1% or less with respect to the fundamental wave. Accordingly, the wavelength converters 602 and 603 are not needed to have high conversion efficiency. Achieving high wavelength conversion efficiency requires strict control of the angle, temperature, or the like of the non-linear optical crystals in the wavelength converters 602 and 603. To this end, device costs increase. However, even low wavelength conversion efficiency can work in the present embodiment. Therefore, there is an advantage that the device is easily created and can be realized at low costs.

In the present embodiment, although it may be possible to eliminate the second harmonic and irradiate the target with only the fundamental wave and the fourth harmonic, the second harmonic may be simultaneously irradiated since the second harmonic also contributes to ablation. Moreover, a configuration for eliminating the second harmonic is not needed, and therefore a device configuration is simplified.

Here, the fourth harmonic is used since the material of the target is aluminum. However, a suitable harmonic may be used in accordance with the material of the target. For example, when the material of the target is copper, the copper has a high absorptivity at a wavelength of 600 nm or less. Therefore, when the target is simultaneously irradiated with the fundamental wave (1064 nm) and the second harmonic (532 nm), the effect of ablation enhancement is obtained. In a case in which the fundamental wave and the second harmonic are used, the laser beam generating device 106 is only required to include the laser beam source 601 and the wavelength converter 602 as shown in Fig. 5B. Further, metal generally has a high absorptivity at a wavelength of about 300 nm or less. Therefore, if the fourth harmonic (266 nm), a fifth harmonic (213 nm), or a higher harmonic is used, strong ablation can be caused in general metal using a laser oscillator of 1 µm band.

The material of the target is not limited to metal but may be any material. An example of the material includes glass, polymer, and CFRP (carbon fiber reinforced polymer composite material). Some materials absorb a laser beam at a wavelength of 1 µm or longer. When such materials are the materials of the target, the laser beam generating device 106 is only required to convert a wavelength of a part of a laser beam output from the laser beam source 601 with an optical parametric oscillator (OPO) 604 as shown in Fig. 5C.

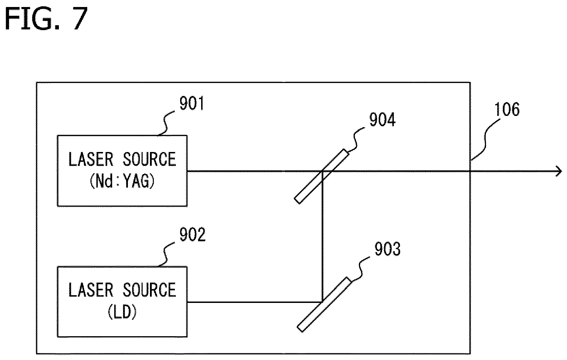

In the above description, the laser beam generating device 106 causes the one beam source and the wavelength converters to generate laser beams having a plurality of wavelengths. However, the laser beam generating device 106 may have a plurality of beam sources. For example, as shown in Fig. 7, the laser beam generating device 106 may have an Nd:YAG laser beam source 901 and a semiconductor laser beam source 902, and couple two laser beams together by mirrors 903 and 904 to be irradiated. A semiconductor laser is small, and therefore does not cause a disadvantage in terms of the device configuration even when the number of beam sources is increased. Further, a semiconductor laser can oscillate a laser beam having a wavelength of a wide range from visible light to infrared light. Therefore, a semiconductor laser made of an appropriate material is only required to be employed in accordance with the material of the target. For example, when the material of the target is aluminum, the aluminum absorbs a laser beam at a wavelength of 800 nm band. Therefore, if an infrared semiconductor laser is employed as the semiconductor laser beam source 902, strong ablation can be caused in the aluminum as the target.

The above description mentions use in which the laser beam irradiation device (thrust generating device) 109 is mounted in the spacecraft and irradiates the debris 200 existing in the cosmic space with the laser beams, and the position or the attitude of the debris 200 is changed by thrust resulting from ablation. However, the laser beam irradiation device (thrust generating device) is not necessarily used in the cosmic space but may be used on the ground or in the atmosphere.

### (Demonstration Data)

A verification experiment showing that ablation is actually enhanced by simultaneously irradiating a target with laser beams having different wavelengths was conducted. Here, copper is used as the target. As shown in Fig. 6, copper has a high absorptivity at a wavelength of 600 nm or less. Therefore, in the verification experiment, the target was simultaneously irradiated with a laser beam having a wavelength of 1064 nm and a laser beam having a wavelength of 532 nm, and generated impulses were measured using a laser beam generating device having the configuration shown in Fig. 5B. Further, as a comparative experiment, impulses generated when the target was individually irradiated with the laser beam having a wavelength of 1064 nm and the laser beam having a wavelength of 532 nm and when the target was irradiated with these laser beams at its different spot were measured. In any of these experiments, average pulse energy of the laser beam having a wavelength of 1064 nm and average pulse energy of the laser beam having a wavelength of 532 nm were 188 mJ and 89 mJ, respectively.

Experimental results were obtained as follows. Note that reproducibility of average thrust under the same condition is assumed to be 0.01.

**[Table 1]**

| | Irradiation condition of laser beam | Average generated impulse (µNs) |
|---|---|---|
| Present method | Irradiation of laser beams having two wavelengths at the same spot | 4.99 |
| Comparative example 1 | Irradiation of laser beams having two wavelengths at a different spot | 4.73 |
| Comparative example 2-1 | Irradiation of a laser beam having a wavelength of 1064 nm | 2.43 |
| Comparative example 2-2 | Irradiation of a laser beam having a wavelength of 532 nm | 2.28 |

The results show that an impulse obtained by irradiating the target with the laser beams having the two wavelengths at the same spot is 4.99 µNs, which is larger than the sum of impulses obtained by irradiating the target with the laser beams having the respective wavelengths. On the other hand, an impulse obtained by irradiating the target with the laser beams having the two wavelengths at a different spot is 4.73 µNs, which is nearly equal to the sum of the impulses obtained by irradiating the target with the laser beams having the respective wavelengths. Obtained thrust was increased by 0.26 µNs (5.6%) when the target was irradiated with the laser beams at the same spot compared with a case in which the target was irradiated with the laser beam at the different spot. It is found that this increase is a superior synergy effect according to the present method.

### (Miscellaneous)

The configurations of the above embodiment and modified examples can be appropriately combined together to be used without departing from the technological idea of the present invention. Further, the present invention may be appropriately modified to be realized without departing from the technological idea.

### [Reference Signs List]

- 100: Spacecraft
- 101: Acquisition unit
- 102: Detection unit
- 103: Control unit
- 104: Propulsion unit
- 105: Communication unit
- 106: Laser beam irradiation unit
- 107: Focus unit
- 108: Steering unit
- 109: Laser beam irradiation device
- 110: Monitoring device
- 200: Debris

## Claims

1. A thrust generating device (109) for irradiating a target (200) with a laser beam to generate thrust for the target (200), the thrust generating device (109) comprising:
a laser beam generating device (106) configured to generate a first laser beam having a first wavelength and a second laser beam having a second wavelength different from the first wavelength; and
an irradiation device (107, 108) configured to simultaneously irradiate the target (200) with the first laser beam and the second laser beam.
**characterized in that** the laser beam generating device (106) includes:
a laser beam source (601) configured to generate the first laser beam; and
a wavelength converter (602; 604) configured to convert a part of the first laser beam generated from the laser beam source into the second laser beam.

2. The thrust generating device (109) according to claim 1,
wherein the second wavelength is a wavelength shorter than the first wavelength, and
wherein the wavelength converter (602) includes a non-linear optical crystal configured to generate a harmonic of the first laser beam.

3. The thrust generating device (109) according to claim 2, wherein the wavelength converter (602) has wavelength conversion efficiency of 10% or less.

4. The thrust generating device (109) according to any one of claims 1 to 3, wherein the second wavelength is a wavelength 1/2 or 1/4 of the first wavelength.

5. The thrust generating device (109) according to claim 1,
wherein the second wavelength is a wavelength longer than the first wavelength, and
wherein the wavelength converter (604) includes an optical parametric oscillator.

6. The thrust generating device (109) according to any one of claims 1 to 5, wherein the laser beam source (601) is a solid laser or a fiber laser that oscillates at a wavelength of 1 µm band.

7. The thrust generating device (109) according to claim 1, wherein the wavelength converter (602) of the laser beam generating device (106) has a first non-linear optical crystal for converting a part of the laser beam generated from the laser beam source (601) into the second laser beam having a second harmonic with half the wavelength of the laser beam, and wherein the laser beam generating device (106) further includes a second wavelength converter (603) which has a second non-linear optical crystal for converting the second harmonic output from the wavelength converter into a third laser beam having a fourth harmonic with half the wavelength of the second laser beam.

8. The thrust generating device (109) according to claim 7, wherein an intensity of the fourth harmonic output from the second wavelength converter (603) is 1% or less of an intensity of the first laser beam output from the laser beam source (601).

9. The thrust generating device (109) according to claim 7 or 8, wherein the device (109) does not include a configuration for eliminating the second harmonic, and the irradiation device (107, 108) is configured to simultaneously irradiate the target (200) with the first laser beam, the second harmonic and the fourth harmonic.

10. The thrust generating device (109) according to any one of claims 1 to 9, wherein the laser beam source (601) is a Nd:YAG laser beam source, and the first wavelength is 1064 nm.

11. The thrust generating device (109) according to any one of claims 1 to 10, wherein the second wavelength has a higher absorptivity in the target (200) than the first wavelength.

12. A spacecraft for irradiating a target (200) with a laser beam to change an orbit or an attitude of the target (200) in a cosmic space, the spacecraft comprising:
the thrust generating device (109) according to any one of claims 1 to 11,
wherein the irradiation device irradiates the target (200) with the laser beam so that the laser beam generated from the laser beam generating device (106) converges at the target (200).

## Patentansprüche

1. Schuberzeugungsvorrichtung (109) zum Bestrahlen eines Ziels (200) mit einem Laserstrahl, um Schub für das Ziel (200) zu erzeugen, wobei die Schuberzeugungsvorrichtung (109) Folgendes umfasst:
eine Laserstrahlerzeugungsvorrichtung (106), die so ausgebildet ist, dass sie einen ersten Laserstrahl erzeugt, der eine erste Wellenlänge aufweist, und einen zweiten Laserstrahl, der eine zweite, von der ersten Wellenlänge unterschiedliche Wellenlänge aufweist; und
eine Bestrahlungsvorrichtung (107, 108), die so ausgebildet ist, dass sie das Ziel (200) gleichzeitig mit dem ersten Laserstrahl und dem zweiten Laserstrahl bestrahlt, **dadurch gekennzeichnet, dass** die Laserstrahlerzeugungsvorrichtung (106) Folgendes einschließt:
eine Laserstrahlquelle (601), die so ausgebildet ist, dass sie den ersten Laserstrahl erzeugt; und
einen Wellenlängenumwandler (602; 604), der so ausgebildet ist, dass er einen Teil des von der Laserstrahlquelle erzeugten ersten Laserstrahls in den zweiten Laserstrahl umwandelt.

2. Schuberzeugungsvorrichtung (109) nach Anspruch 1,
wobei die zweite Wellenlänge eine Wellenlänge ist, die kürzer als die erste Wellenlänge ist, und
wobei der Wellenlängenumwandler (602) ein nichtlineares optisches Kristall einschließt, das so ausgebildet ist, dass es eine Oberwelle des ersten Laserstrahls erzeugt.

3. Schuberzeugungsvorrichtung (109) nach Anspruch 2, wobei der Wellenlängenumwandler (602) eine Wellenlängenumwandlungseffizienz von 10 % oder weniger aufweist.

4. Schuberzeugungsvorrichtung (109) nach einem der Ansprüche 1 bis 3, wobei die zweite Wellenlänge eine Wellenlänge ist, die 1/2 oder 1/4 der ersten Wellenlänge ist.

5. Schuberzeugungsvorrichtung (109) nach Anspruch 1,
wobei die zweite Wellenlänge eine Wellenlänge ist, die länger als die erste Wellenlänge ist, und
wobei der Wellenlängenumwandler (604) einen optischen parametrischen Oszillator einschließt.

6. Schuberzeugungsvorrichtung (109) nach einem der Ansprüche 1 bis 5, wobei die Laserstrahlquelle (601) ein Festkörperlaser oder ein Glasfaserlaser ist, der bei einer Wellenlänge von 1 µm-Band oszilliert.

7. Schuberzeugungsvorrichtung (109) nach Anspruch 1, wobei der Wellenlängenumwandler (602) der Laserstrahlerzeugungsvorrichtung (106) ein erstes nichtlineares optisches Kristall zum Umwandeln eines Teil des von der Laserstrahlquelle (601) erzeugten Laserstrahls in den zweiten Laserstrahl aufweist, der eine zweite Oberwelle mit der halben Wellenlänge des Laserstrahls aufweist, und wobei die Laserstrahlerzeugungsvorrichtung (106) weiter einen zweiten Wellenlängenumwandler (603) einschließt, der ein zweites nichtlineares optisches Kristall zum Umwandeln der zweiten von dem Wellenlängenumwandler ausgegebenen Oberwelle in einen dritten Laserstrahl aufweist, der eine vierte Oberwelle mit der halben Wellenlänge des zweiten Laserstrahls aufweist.

8. Schuberzeugungsvorrichtung (109) nach Anspruch 7,
wobei eine Intensität der vierten von dem zweiten Wellenlängenumwandler (603) ausgegebenen Oberwelle 1 % oder weniger einer Intensität des ersten von der Laserstrahlquelle (601) ausgegebenen Laserstrahls ist.

9. Schuberzeugungsvorrichtung (109) nach Anspruch 7 oder 8,
wobei die Vorrichtung (109) keine Konfiguration zum Beseitigen der zweiten Oberwelle einschließt und die Bestrahlungsvorrichtung (107, 108) so ausgebildet ist, dass sie das Ziel (200) gleichzeitig mit dem ersten Laserstrahl, der zweiten Oberwelle und der vierten Oberwelle bestrahlt.

10. Schuberzeugungsvorrichtung (109) nach einem der Ansprüche 1 bis 9,
wobei die Laserstrahlquelle (601) eine Nd:YAG-Laserstrahlquelle ist und die erste Wellenlänge 1064 nm beträgt.

11. Schuberzeugungsvorrichtung (109) nach einem der Ansprüche 1 bis 10,
wobei die zweite Wellenlänge einen höheren Absorptionsgrad im Ziel (200) als die erste Wellenlänge aufweist.

12. Raumfahrzeug zum Bestrahlen eines Ziels (200) mit einem Laserstrahl, um eine Umlaufbahn oder eine Fluglage des Ziels (200) in einem kosmischen Raum zu verändern, wobei das Raumfahrzeug Folgendes umfasst:
die Schuberzeugungsvorrichtung (109) nach einem der Ansprüche 1 bis 11,
wobei die Bestrahlungsvorrichtung das Ziel (200) mit dem Laserstrahl so bestrahlt, dass der von der Laserstrahlerzeugungsvorrichtung (106) erzeugte Laserstrahl am Ziel (200) konvergiert.

## Revendications

1. Dispositif (109) de génération de poussée pour irradier une cible (200) au moyen d'un faisceau laser afin de générer une poussée pour la cible (200), le dispositif (109) de génération de poussée comprenant :
un dispositif (106) de génération de faisceaux laser configuré pour générer un premier faisceau laser présentant une première longueur d'onde et un deuxième faisceau laser présentant une deuxième longueur d'onde différente de la première longueur d'onde ; et
un dispositif d'irradiation (107, 108) configuré pour irradier simultanément la cible (200) au moyen du premier faisceau laser et du deuxième faisceau laser, **caractérisé en ce que** le dispositif (106) de génération de faisceaux laser inclut :
une source (601) de faisceau laser configurée pour générer le premier faisceau laser ; et
un convertisseur de longueur d'onde (602 ; 604) configuré pour convertir une partie du premier faisceau laser généré à partir de la source de faisceau laser en le deuxième faisceau laser.

2. Dispositif (109) de génération de poussée selon la revendication 1,
dans lequel la deuxième longueur d'onde est une longueur d'onde plus courte que la première longueur d'onde, et
dans lequel le convertisseur de longueur d'onde (602) inclut un cristal optique non linéaire configuré pour générer une harmonique du premier faisceau laser.

3. Dispositif (109) de génération de poussée selon la revendication 2, dans lequel le convertisseur de longueur d'onde (602) présente une efficacité de conversion de longueur d'onde inférieure ou égale à 10 %.

4. Dispositif (109) de génération de poussée selon l'une quelconque des revendications 1 à 3, dans lequel la deuxième longueur d'onde est une longueur d'onde égale à 1/2 ou 1/4 de la première longueur d'onde.

5. Dispositif (109) de génération de poussée selon la revendication 1,
dans lequel la deuxième longueur d'onde est une longueur d'onde plus longue que la première longueur d'onde, et
dans lequel le convertisseur de longueur d'onde (604) inclut un oscillateur paramétrique optique.

6. Dispositif (109) de génération de poussée selon l'une quelconque des revendications 1 à 5, dans lequel la source (601) de faisceau laser est un laser à solide ou un laser à fibre qui oscille à une longueur d'onde d'une bande de 1 µm.

7. Dispositif (109) de génération de poussée selon la revendication 1, dans lequel le convertisseur de longueur d'onde (602) du dispositif (106) de génération de faisceaux laser présente un premier cristal optique non linéaire pour convertir une partie du faisceau laser généré à partir de la source (601) de faisceau laser en le deuxième faisceau laser présentant une deuxième harmonique ayant une longueur d'onde égale à la moitié de la longueur d'onde du faisceau laser, et dans lequel le dispositif (106) de génération de faisceaux laser inclut en outre un deuxième convertisseur de longueur d'onde (603) qui présente un deuxième cristal optique non linéaire pour convertir la deuxième harmonique délivrée en sortie par le convertisseur de longueur d'onde en un troisième faisceau laser présentant une quatrième harmonique ayant une longueur d'onde égale à la moitié de la longueur d'onde du deuxième faisceau laser.

8. Dispositif (109) de génération de poussée selon la revendication 7,
dans lequel une intensité de la quatrième harmonique délivrée en sortie par le deuxième convertisseur de longueur d'onde (603) est inférieure ou égale à 1 % d'une intensité du premier faisceau laser délivré en sortie par la source (601) de faisceau laser.

9. Dispositif (109) de génération de poussée selon la revendication 7 ou la revendication 8,
dans lequel le dispositif (109) n'inclut pas de configuration destinée à éliminer la deuxième harmonique, et le dispositif d'irradiation (107, 108) est configuré pour irradier simultanément la cible (200) au moyen du premier faisceau laser, de la deuxième harmonique et de la quatrième harmonique.

10. Dispositif (109) de génération de poussée selon l'une quelconque des revendications 1 à 9,
dans lequel la source (601) de faisceau laser est une source de faisceau laser Nd:YAG, et la première longueur d'onde est 1 064 nm.

11. Dispositif (109) de génération de poussée selon l'une quelconque des revendications 1 à 10,
dans lequel la deuxième longueur d'onde présente une absorptivité dans la cible (200) supérieure à l'absorptivité de la première longueur d'onde.

12. Engin spatial pour irradier une cible (200) au moyen d'un faisceau laser afin de modifier une orbite ou une attitude de la cible (200) dans un espace cosmique, l'engin spatial comprenant :
le dispositif (109) de génération de poussée selon l'une quelconque des revendications 1 à **11,**
dans lequel le dispositif d'irradiation irradie la cible (200) au moyen du faisceau laser de sorte que le faisceau laser généré à partir du dispositif (106) de génération de faisceaux laser converge sur la cible (200).
